# EUROPEAN PATENT APPLICATION

(11) **EP 4 741 361 A1**
(43) Date of publication of application: **13.05.2026**
(21) Application number: 24211377.7
(22) Date of filing: 07.11.2024
(51) Int. Cl.: C04B 14/02, C04B 26/02, C04B 28/04, C04B 28/26

(54) **COMPOSITE AND METHOD OF ITS PRODUCTION**

(71) Applicant: Chomicka, Marta, 04-078 Warszawa (PL); Glowienko, Tomasz, 03-289 Warszawa (PL); Osuchowski, Lukasz, 08-830 Wolica k/ Nadarzyna (PL); Mikulski, Robert, 04-830 Warszawa (PL); Myszka, Jaroslaw, 08-112 Wisniew (PL)
(72) Inventor: Chomicka, Marta, 04-078 Warszawa (PL); Glowienko, Tomasz, 03-289 Warszawa (PL); Osuchowski, Lukasz, 08-830 Wolica k/ Nadarzyna (PL); Mikulski, Robert, 04-830 Warszawa (PL); Myszka, Jaroslaw, 08-112 Wisniew (PL)
(74) Representative: Jedrzejewski, Michal

(57) **Abstract**

A composite comprising conditioned carbon black and at least one binder, characterised in that the carbon black content ranges from 10% to 50% by weight of the mixture intended for homogenisation with the binder, which is an organic, inorganic, organosilicon, or polymeric substance, and the binder content ranges from 10% to 50% by weight, while the remainder of the composite may optionally comprise additives in an amount of up to 50% by weight; and a method for the production of said composite.

## Description

The present invention relates to a composite comprising conditioned carbon black and to a method for the production thereof.

Document CN114538536 discloses a Ni₃S₂/C nanocomposite wave-absorbing material composed of Ni₃S₂ and amorphous carbon (carbon black), obtained via the molten salt method. The material exhibits high electromagnetic wave absorption efficiency, with maximum absorption reaching -69.82 dB and an effective bandwidth exceeding 5.56 GHz. It is lightweight, thin, mechanically stable, and thus suitable for broad applications in electromagnetic shielding.

Document CN111440004 discloses a refractory carbon-based nanocomposite sealing material intended for high-temperature furnace construction, especially for use in blast furnaces. The material includes black silicon carbide, graphite, kyanite, silicon dioxide micropowder, nanoscale carbon black, antioxidants, hardeners, and a resin binder. Its formulation is designed to maximise packing density, improving heat transfer and thermal resistance.

Document KR20200053065 discloses polydicyclopentadiene (PDCPD) composites with improved mechanical, conductive, and insulating properties. The synthesis involves mixing dicyclopentadiene (DCPD) of ≥90% purity with metal-based catalysts and additives including carbon black and nanocomposite materials.

Despite these disclosures, no known solutions offer a composite that combines multifunctionality and compatibility with a wide range of technical applications, particularly in:
- (a) thermal barrier systems resistant to radiant heat and open flames,
- (b) acoustic insulation and sound wave absorption,
- (c) structural applications in construction and architecture,
- (d) catalytic and high-temperature purification systems,
- (e) electrochemical electrodes,
- (f) electromagnetic shielding (EMI/RFI).

Unexpectedly, the composite of the present invention demonstrates the above-described multifunctionality and applicability.

The invention relates to a composite comprising conditioned carbon black and at least one binder, wherein the carbon black content is in the range of 10-50 wt% of the pre-homogenised mixture, and the binder, selected from organic, inorganic, organosilicon, or polymeric substances, constitutes 10-50 wt%. The composite may additionally comprise up to 50 wt% of optional additives.

Preferably, the binder is selected from water glass, Portland cement, or organic binders such as polymers, copolymers, resins, or fluoropolymers, including FEVE.

The additives are preferably selected from Mg(OH)₂, Ca(OH)₂, CaCO₃, MgCO₃, Al₂O₃, solvents (e.g., water, alcohols), and hardeners adapted to the matrix, such as:
- (a) for inorganic matrices: concrete, carbonates, calcium-magnesium compounds;
- (b) for polymer matrices: cross-linking agents for polymerisation or polycondensation, including isocyanate solutions, polythiophenesulfonic acid, and benzoyl peroxide.

In another aspect, the invention relates to a method for producing the above composite, wherein the carbon black is derived from primary production, recovery, or recycling processes, and comprises any loose or amorphous form lacking allotropic structure.

The method comprises:
1. Calcination of carbon black at temperatures >600°C, preferably ~800°C, in an inert atmosphere until a constant mass is achieved;
2. Conditioning of the carbon black in an inert gas stream, preferably nitrogen (technical grade or higher, ≥99.96%);
3. Mixing and homogenising the carbon black, binder, and additives at 10-80°C, preferably at 25°C, using mixers that ensure isotropic distribution, preferably mechanical mixers with axial impellers with inclined blades operating at 150-200 rpm;
4. Final homogenisation until full batch uniformity is achieved, followed by curing to dry mass at 10-350°C, preferably at 20-90°C.

Preferably, the carbon black is sieved through a 200-400 µm mesh prior to mixing. Mixing may be performed manually or mechanically for 1-24 hours, preferably ~2 hours. The homogenised mixture may be granulated using known methods or cast into moulds of desired dimensions. Homogenisation may last from 10 minutes to 24 hours, preferably ~60 minutes, under moisture isolation.

### Examples

Carbon black used in the invention may be derived from elastomer production (e.g., tyres, conveyor belts, filters) or any carbonaceous waste. The composite can be used in construction elements such as panels, pipes, or monolithic systems, where the binder comprises organic, inorganic, organosilicon, or polymeric materials (e.g., adhesives, cements, clays).

The obtained composite has, among others, the properties indicated in Table 1

**Table 1**

| PROPERTIES | 1. | 2. | 3. |
|---|---|---|---|
| Porosity | Specific surface area | Total pore volume V_{T}= 0.09 cm³/g | - |
| | S_{BET}=66.6 m²/g | | |
| Radiation transmission in the range of 1 to 27 µm | Approximately 98% | - | - |
| Radiation reflection in the range of 300 to 2500 nm | Approximately 96% | - | - |
| Thermal barrier | Application of temperature 240°C | 150°C received | Temperature difference approx. 100°C |

### Performance Characteristics

The composite exhibits a multi-peak pore size distribution (PSD-DFT), indicating potential for thermal radiation absorption. Reflectance tests confirm reflectivity of only 3-4% for visible and near-infrared light, rendering the material suitable for stealth or radiation-shielding applications.

Minor signal disturbances in the 850-950 nm and 1800-2400 nm ranges are attributed to functional group vibrations or phonon interactions. These are not indicative of continuous spectral response.

Thermal resistance exceeds 2000°C, validated via direct exposure to an acetylene-oxygen flame. The carbon nanostructure does not ignite or transfer heat. Synthesis at elevated temperatures ensures the absence of toxic by-products, with only CO₂ and H₂O released under high thermal stress.

Production does not present technical barriers but requires strict ratio control due to carbon black's low wettability and high dust mobility. The mixture is slowly agitated, followed by addition of a binder activator to initiate setting. The viscous mass is moulded and then either air-dried or placed in a drying chamber.

| Nr . | INGRE DIENTS | PROPORT IONS | ADDITI VES | PROPOR TIONS OF ADDITI VES | PREPAR ATION | PREPAR ATION | SUGGES TED APPLIC ATION |
|---|---|---|---|---|---|---|---|
| 1 | Black powder SW | 1 0.8-2 | H₂O alcohol | 10-50% 6-46% | Mechanic al homogeni sation process | flooded moulds, free drying (up to 30°C) | heat-resistant barrier materials |
| 2 | Black powder SW | 1 0.8-1.5 | H₂O alcohol | up to 20% up to 20% | Mechanic al homogeni sation process | flooded closed moulds, forced drying at 300°C) | heat-resistant barrier materials |
| 3 | black powder, purified and sieved SW | 1 0.8-1.5 | H₂O alcohol | up to 30% 10% | homogeni sation process | flooded moulds, free drying or elements formed on a hydraulic press | heat-resistant barrier materials designed to protect against thermal radiation and exposure to open flames |
| 4 | black powder, purified and sieved SW | 1 0.8-1.5 | CaCO3 | up to 30% 10% | Mechanic al homogeni sation process | airtight glass container s dried at 100°C | sound wave absorptio n, or electrode s, |
| 5 | black powder, purified and sieved SW | 1 0.8-1.5 | H₂O alcohol | 10-20% | homogeni sation process | airtight glass container s dried at up to 100°C | sound wave absorptio n, or electrode s, |
| 6 | black powder, purified and sieved | 1 | H₂O CaCO3 | 10-20 % up to 20% | homogeni sation process | flooded moulds, free drying, for 30°C | wysokote mperatur owe uk 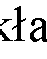 ady oczyszcz ania i katalizy, |
| | | | | | | | Wide range electroma gnetic smog insulation |
| 7 | black powder, purified and sieved | 1 | Rozpusz czalnik | 20-25 % | homogeni sation process | flooded moulds, free drying, for 30°C | sound wave absorptio n, or electrode s, |
| | | 1 | utwardz acz | 12-15% | | | Wide range electroma gnetic smog insulation |
| | epoxy resin | | | | | | |

The composite may be formed into various geometries during mixing and shaping phases. The material has been produced in the form of acoustic fillers and plates. Scanning electron microscopy confirms effective immobilisation of carbon nano- and microparticles within the binder matrix.

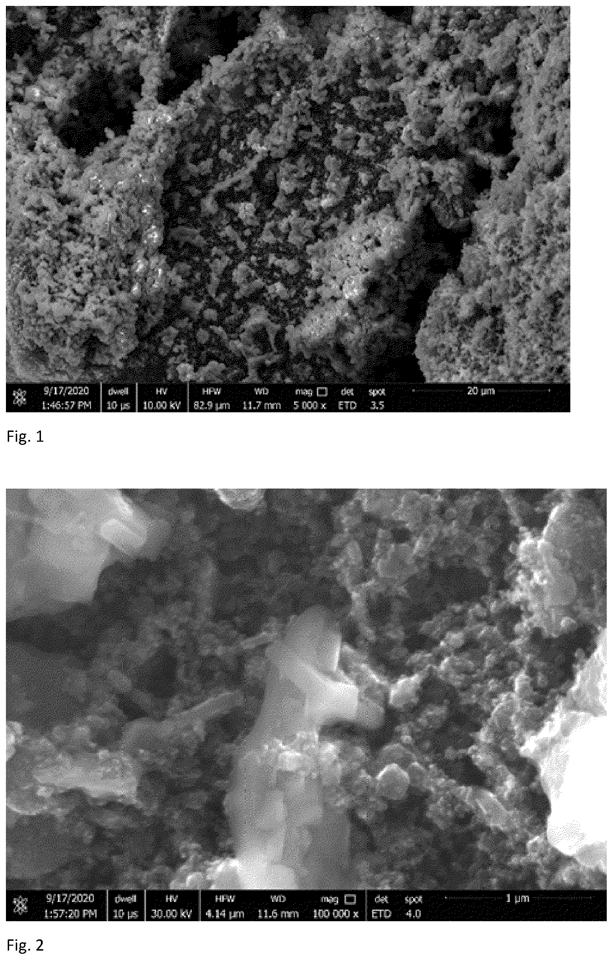

## Claims

1. A composite comprising conditioned carbon black and at least one binder, **characterised in that** the carbon black content ranges from 10% to 50% by weight of the mixture intended for homogenisation with the binder, which is selected from organic, inorganic, organosilicon, or polymeric substances, and **in that** the binder content ranges from 10% to 50% by weight, and wherein the remainder of the composite may consist of additives in an amount of up to 50% by weight.

2. The composite according to claim 1, **characterised in that** the binder is selected from water glass, Portland cement, or organic binders, in particular polymers, copolymers, resins, and fluoropolymers, including FEVE.

3. The composite according to any one of claims 1 or 2, **characterised in that** the additives are selected from Mg(OH)₂, Ca(OH)₂, CaCO₃, MgCO₃, Al₂O₃, solvents, in particular H₂O and alcohols, or hardeners adapted to the respective matrix, and are intended to increase surface porosity, comprising:
a) for inorganic matrices - concrete, carbonates, calcium-magnesium carbonate, magnesium carbonate, aluminium trioxide, calcium hydroxide, magnesium hydroxide;
b) for polymer matrices - cross-linking agents adapted for polymerisation or polycondensation processes, i.e. for macromolecular synthesis, in particular isocyanate solutions, polythiophenesulfonic acid, and benzoyl peroxide.

4. A method of manufacturing a composite comprising carbon black, in particular as a substrate for the production of elastomers such as tyres, filters, conveyor belts, or originating from any form of recovery and/or disposal, or present in any loose form, or in the form of amorphous carbon not exhibiting any allotropic structure, **characterised in that**:
(1) the carbon black is subjected to calcination at a temperature above 600°C, preferably at approximately 800°C, in an inert atmosphere until a constant mass is achieved;
(2) the conditioning process of the carbon black (substrate) is conducted in an inert atmosphere, preferably under a flow of nitrogen with at least technical-grade purity, more preferably 99.96%;
(3) the components defined in claims 1 to 3 are combined and homogenised at a temperature of 10°C to 80°C, preferably around 25°C, in mixers ensuring isotropic distribution, preferably mechanical mixers equipped with an axial agitator with inclined blades, operating at a screw speed of 150-200 rpm;
(4) the mixture is further homogenised until fully uniform, and the obtained product is cured to dry mass at temperatures between 10°C and 350°C, preferably from 20°C to 90°C.

5. The method according to claim 4, **characterised in that** prior to homogenisation, the carbon black is sieved through a mesh with a size of 200 to 400 µm.

6. The method according to any one of claims 4 or 5, **characterised in that** the components are mixed mechanically or manually, preferably for 1 to 24 hours, more preferably for about 2 hours, and granulated by known methods or preferably cast into a mould of desired shape and dimensions.

7. The method according to any one of claims 4 to 6, **characterised in that** the homogenisation of the mixture is performed mechanically or manually, preferably within 10 minutes to 24 hours, more preferably for 60 minutes, while protecting the mixture from exposure to moisture.
